# EUROPÄISCHE PATENTSCHRIFT

(11) **EP 0 902 767 B1**
(45) Veröffentlichungstag und Bekanntmachung des Hinweises auf die Patenterteilung: **26.04.2000**
(21) Anmeldenummer: 97925926.4
(22) Anmeldetag: 17.05.1997
(51) Int. Cl.: C04B 7/44, C02F 11/00

(54) **VERFAHREN ZUR RESTSTOFFENVERWERTUNG FÜR DIE HERSTELLUNG VON PORTLANDZEMENTKLINKER**
PROCESS FOR THE RECYCLING OF RESIDUES FOR THE PRODUCTION OF PORTLAND CEMENT CLINKER
PROCEDE DE RECYCLAGE DE RESIDUS POUR LA FABRICATION DE CLINKER DE CIMENT PORTLAND

(30) Priorität: 05.06.1996 DE 19622591
(43) Veröffentlichungstag der Anmeldung: 24.03.1999
(73) Patentinhaber: Heidelberger Zement AG, D-69120 Heidelberg (DE)
(72) Erfinder: ERHARD, Helmut, S., D-69168 Wiesloch (DE); SCHNEIDER, Volker, D-97855 Triefenstein (DE); KORF, Paul, 48351 Everswinkel (DE)
(74) Vertreter: Grussdorf, Jürgen, Dr.
(86) Internationale Anmeldenummer: EP9702539
(87) Internationale Veröffentlichungsnummer: WO9746496

(56) Entgegenhaltungen:
- WO-A-94/29231
- DE-A- 3 542 004
- US-A- 5 392 721
- DATABASE WPI Section Ch, Week 9134 Derwent Publications Ltd., London, GB; Class D15, AN 91-248110 XP002041466 & JP 03 160 091 A (KINKI KANKYO KOSAN) , 10.Juli 1991
- PATENT ABSTRACTS OF JAPAN vol. 096, no. 001, 31.Januar 1996 & JP 07 239118 A (ONODA KEMIKO KK), 12.September 1995,

## Beschreibung

Die Erfindung beschreibt ein neues Verfahren zur stofflichen und thermischen Nutzung von Wasser, Mineralien und brennbare Anteile enthaltenden Reststoffen, insbesondere aus der Papierindustrie, in Zementöfen, für die Herstellung von Portlandzementklinker.

Bei einer Reihe von industriellen Prozessen werden in größeren Mengen als Abfall Schlämme produziert, welche größere Mengen Wasser (30 - 70 %), brennbare organische Substanzen (10 - 30 %) und mineralische Füllstoffe, insbesondere Ton, Silikat oder Kalk (10 - 50 %) enthalten. Typische Beispiele dafür ist der beim Recycling von Altpapier oder Farblacken anfallende Abfallschlamm. Da eine Weiterverarbeitung solcher Produkte in den meisten Fällen ausscheidet, ist es notwendig, sie entweder zu deponieren oder zu verbrennen, wobei wiederum ein hoher Anteil von Asche anfällt, der deponiert werden muß. Der hohe Anteil von Wasser ist für beide Verfahren außerordentlich störend, so daß diese Reststoffe in der Vergangenheit oft mit hohem Investitionsaufwand vorgetrocknet wurden. Die allgemeine Verknappung und Verteuerung von Deponiemöglichkeiten und die Vergeudung der in den Schlammabfällen enthaltenen Reststoffe und der in den organischen Bestandteilen enthaltenen thermischen Energie zwingt jedoch dazu, ein Verfahren zu suchen, solche Stoffe auch auf andere Weise zu verwerten.

Beispielhaft sei auf die Papierherstellung verwiesen. Die bei der Papierherstellung als Füllstoff und zur Oberflächenvergütung verwendeten tonhaltigen Materialien bleiben bei der Altpapieraufbereitung, zusammen mit feinfaserigem Zellstoff, als Reststoff zurück. Dieser entspricht folgender durchschnittlicher Zusammensetzung:

| | |
|---|---|
| Trockensubstanz | ca. 35 - 65 % |
| Wasser | ca. 65 - 35 % |
| Mineralische Anteile | ca. 10 - 30 % |
| Brennbare Anteile | ca. 10 - 35 % |
| Heizwert | ca. 3000 - 4000 kJ/kg |

Eine stoffliche und thermische Verwertung von nennenswerten Mengen solcher ungetrockneter und unbehandelter Papierreststoffe scheiterte bisher an geeigneten Verfahren und Einrichtungen, die eine wirtschaftliche und umweltverträgliche Verwertung ermöglichen. Deshalb müssen die Reststoffe mit hohem Investitionsaufwand auf einen Restwassergehalt von 10 - 30 % vorgetrocknet werden.

Es stellte sich daher die Aufgabe, ein Verfahren zu finden, wie man Wasser, mineralische und brennbare Anteile enthaltende Reststoffe ohne vorhergehende Trocknung und ohne die Erzeugung von zu deponierenden Abfällen zu einem brauchbaren Endprodukt weiterverarbeiten kann.

Diese Aufgabe wird durch die Merkmale des Hauptanspruchs gelöst und durch die Merkmale der Unteransprüche gefördert.

Aus der AT 394 711 B bzw. EP 0 488 989 B1 ist bereits bekannt, daß zur Herstellung von Zementklinker bei der sogenannten Sekundärverbrennung am Ofeneinlauf minderwertige Brennstoffe, wie Gummiabfälle, kohlenhaltigen Abraum, Ölschlamm und dergleichen zuzusetzen, um dadurch einen Teil der zur Calcinierung im Rohmehlvorwärmer benötigten Verbrennungsenergie abzudecken. Wie in dieser Literaturstelle ausgeführt wird, sind Brennstoffe, die so feucht sind, daß die aufzuwendende Verdampfungswärme zur Trocknung des Materials nicht ausreicht oder keinen wesentlichen Energiegewinn erbringt, in diesem Zusammenhang ungeeignet. Es wurde daher vorgeschlagen, solche minderwertigen Brennstoffe zunächst mit der Wärme der Ofenabgase zu trocknen und die getrockneten und daher energiereichen Rückstände der Sekundärverbrennung zuzusetzen.

Bei diesem Verfahren erweist es sich als problematisch, daß die zu trocknenden Produkte brennbare und/oder riechende gasförmige Bestandteile abgeben können, welche trotz der Zyklonabscheidung im Abgas verbleiben und in einer aufwendigen Nachreinigung verbrannt oder in anderer Weise eliminiert werden müssen. Vorteilhaft erweist es sich dabei, daß die in den Reststoffen enthaltenen mineralischen Bestandteile, welche weitgehend den Bestandteilen des Rohmehls für die Klinkerherstellung entsprechen, vollständig wiedergewonnen werden und andererseits die organischen Bestandteile der Energiegewinnung dienen. Nachteilig erweist sich auch, daß die zur Sekundärfeuerung im Ofeneinlauf dienende Abluft des Drehrohrofens vergleichsweise sauerstoffarm ist. so daß bei der Sekundärverbrennung solche Abfallstoffe gegebenenfalls nicht vollständig verbrennen und CO und Kohlenwasserstoffe vermehrt in die Abgase gelangen können.

Es stellte sich daher die zusätzliche Aufgabe, die Verarbeitung der Reststoffe bei der Zementherstellung so zu führen, daß die Abgase der Anlage möglichst arm an NOₓ und CO sind.

Diese Aufgabe wird überraschenderweise gelöst, wenn man die Wasser, mineralische und brennbare Anteile enthaltenden Reststoffe ohne vorhergehende Trocknung nicht in die Sekundärfeuerung bzw. die Rohmehlaufgabe, sondern in das Nebenabwärmesystem des Drehrohrofens einführt. Die hohe Temperatur der ausgetragenen Portlandzementklinker an diesen Stellen (800 - 1200 °C) führt dazu, daß der im eingebrachten Schlamm enthaltene Wasseranteil explosionsartig verdampft und die enthaltenen festen Bestandteile in feinster Form verteilt, so daß die brennbaren Anteile rasch und vollständig im Sauerstoffüberschuß verbrennen. Die mineralischen Bestandteile werden von der Sekundärluft aus dem Kühler in die Klinkerzone des Ofens getragen. Dort wirken sie wie Asche aus der Kohle und nehmen an der Klinkermineralbildung teil. Es lassen sich auf diese Weise z. B. die aus der Papierindustrie stammenden Reststoffe auch in größeren Mengen von bis zu 5 Gew.-%, berechnet als Trockensubstanz zu Ofenmehlaufgabe, zuführen, ohne die Produktqualität Zementklinker zu beeinträchtigen. bei gleichzeitiger Schonung wertvollen Deponieraumes.

Die Erfindung ermöglicht es. daß ein Teil der zur Klinkerherstellung notwendigen thermischen Energie- und Mineralmenge von ungetrockneten, unbehandelten Reststoffen aus der Papierindustrie gedeckt wird, während der übrige Teil auf herkömmliche Weise mit den Primärrohstoffen Kalk und Ton und fossilen Brennstoffen wie Kohle eingebracht wird.

| **Richtanalysenvergleich (in Gew.-%)** | | | |
|---|---|---|---|
| | Steinkohlenflugasche i.A. | Rohton i.A. | Reststoffasche i.A. |
| GLV (Glühverlust) | 3,0 | 10,4 | 4,3 |
| SiO₂ | 44,2 | 52,3 | 36,8 |
| Al₂O₃ | 33,2 | 24,7 | 24,1 |
| Fe₂O₃ | 8,4 | 6,1 | 1,1 |
| CaO | 5,2 | 4,4 | 28,7 |
| MgO | 2,5 | 0,1 | 3,4 |
| K₂O | 2,8 | 0,8 | 1,2 |
| SO₃ | 0,7 | 1,1 | 0,4 |
| | 100,0 | 99,9 | 100 |

Die Reststoffaschen entsprechen einer kalkreichen Kohlenasche oder kalkreichem Ton.

Aus der DE 40 22 181 A1 ist bereits bekannt, daß man vorzerkleinerte Kunststoffabfälle ebenfalls in das Haupt- oder Nebenabwärmesystem einer Zementbrennanlage einführen kann und an dieser Stelle unter Energiegewinnung und damit Einsparung von Primärbrennstoff nutzen kann. Entscheidend dafür ist, daß die zugeführten Kunststoffabfälle möglichst trocken sind und damit einen hohen Verbrennungswert besitzen. Daß es vorteilhaft sein kann, an dieser Stelle vergleichsweise nasse, tonhaltige, und, wenn überhaupt, einen niederen Brennwert enthaltende Reststoffe zuzuführen, läßt sich dieser Literaturstelle nicht entnehmen.

Ein Ofensystem zur Erzeugung von Portlandzementklinker besteht aus einem Hauptwärmesystem und den Nebenwärmesystemen. Unter dem Hauptwärmesystem versteht man den eigentlichen Drehofen, unter den Nebenwärmesystemen einerseits den Brenngutvorwärmer, andererseits den Brenngutkühler des Nebenabwärmesystems. Vorwärmer und Kühler dienen dem Wärmetausch zwischen Brenngut und Brenngas.

Zur Zementklinkerherstellung werden die natürlichen Mineralien in Kalk (ca. 75 %). Ton (ca. 20 %) sowie kleinere Mengen Quarzsand und Eisenerz benotigt. Diese Stoffe werden getrocknet, fein gemahlen, homogenisiert und in den Öfen auf ca. 1450°C erhitzt und gebrannt. Die Gastemperaturen in der heißesten Zone des Ofens erreichen dabei ca. 2000°C.

Der Primärrohstoff Ton ist ein wasserhaltiges Aluminiumsilikat verschiedener kristallographischer Modifikationen (Kaolinit, Illit, Montmorillonit). Primärtone werden in erster Linie für die Herstellung hochwertiger keramischer Produkte (Porzellan, Steingut. Feuerfestmaterial, Abdichtmaterial für Deponien etc.) verwendet. Außerdem gehen nennenswerte Mengen in die Zementindustrie zur Einstellung der hydraulischen Faktoren.

Das bei der Papierherstellung als Füllstoff und zur Oberflächenvergütung verwendete tonhaltige Material bleibt bei der Altpapieraufbereitung zusammen mit dem feinfaserigen Zellstoff als Filterkuchen zurück. Es eignet sich als Ersatz für den Primärrohstoff Ton.

Der den Ton geogenen Ursprungs im Zementrohmaterial ersetzende tonhaltige und ungetrocknete Reststoff kann aufgrund seiner organischen Papierrestfasern nicht dem Rohmaterial am Vorwärmereintritt oder in den oberen Stufen des Vorwärmers zugegeben werden. Aufgrund der Materialfeuchtigkeit und den dadurch bedingten schwierigen Handlingseigenschaften sowie zur Vermeidung gasförmiger Emissionen (CO, CH-Verbindungen) kommt nur eine Aufgabe in den heißen Teil des Haupt- und/oder Nebenwärmesystems des jeweiligen Ofensystems in Frage.

Der Reststoff kann in verschiedener Form dem Ofensystem aufgegeben werden, abhängig vom Wassergehalt. Es ist die Aufgabe in den Kühlerschacht zwischen Ofen und Kühler, d.h. das Nebenabwärmesystem, den Reststoffeinzuführen. Dabei wird der Reststoff pneumatisch in des Nebenabwärmesystem gefördert, das Wasser verdampft und die Feststoffe überwiegend mit dem Sekundärluftstrom in den Ofengefördert, wo der Zellstoff in der Hauptflamme verbrennt. Die Asche erhöht den Aschegehalt des Primärbrennstoffs, meist Kohle. Die Asche im Brennstoff ist für die Klinkermineralbildung ein günstiger Bestandteil, da sie, weitgehend aus kalkreichen Aluminiumsilikaten bestehend, in der Hochtemperaturzone des Ofens wegen des niedrigen Schmelzbereiches zu einer besseren Sinterung und Schmelzphasenbildung beiträgt. Dies begünstigt somit die C₃S-Bildung, vor allem durch Resorption durch Freikalk. Die fein verteilten und hochreaktiven Aluminiumsilikate des Reststoffes tragen somit zur verbesserten Klinkermineralbildung bei.

Durch Verdampfen der im Reststoff enthaltenen Feuchtigkeit im Bereich des Nebenabwärmesystems wird die Temperatur der Sekundärlauft und damit die Flammentemperatur tendenziell erniedrigt und durch die Erhöhung des inerten Ascheanteils eine langsamer ablaufende Brennstoffoxidation in der Hauptflamme erreicht. Beides bewirkt eine nennenswerte Verringerung des thermisch gebildeten NOₓ in der Hauptflamme.

Die Zugabe des Reststoffes am Kühlereinlauf des Nebenabwärmesystems ist bei allen Feuchtigkeitsgehalten möglich. Das Wasser verdampft im Bereich des Kühlerschachts, der Zellstoff verbrennt und die fein dispergierten Ascheteile werden mit der heißen Sekundärluft in den Ofen getragen. Die physikalisch-chemischen Vorgänge des Einflusses der Asche auf die Klinkermineralbildung entsprechen denen der Zugabe über die Brennerdüse.

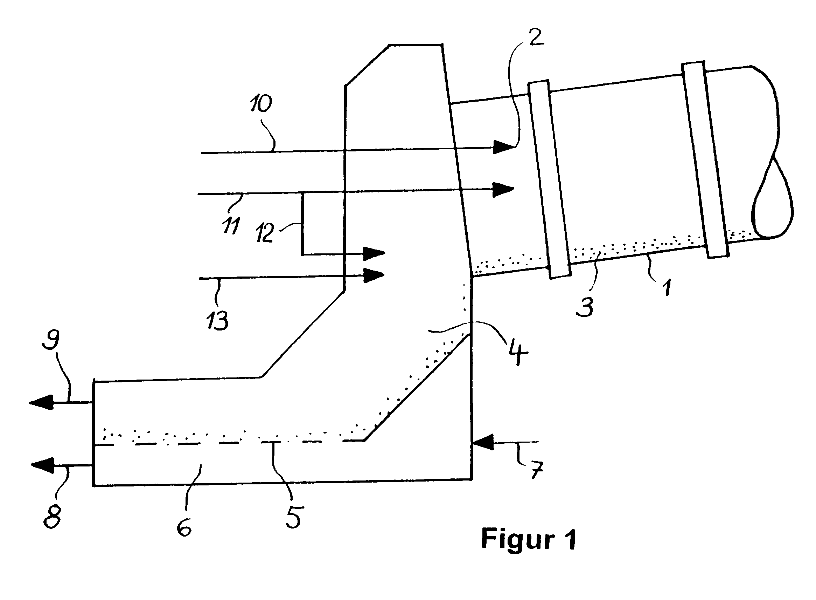

In der beigefügten **Figur 1** ist schematisch der letzte Abschnitt der Drehrohranlage dargestellt. Die Anlage zeigt das Drehrohr 1, in dem die am nicht abgebildeten Einlaß aufgegebenen, vorwiegend aus Calciumoxid, Aluminiumoxid, Siliciumoxid und Eisenoxid bestehenden Rohmehle aufgrund der durch den Brenner 2 erzeugten hohen Flammentemperatur zu Zementklinkern 3 gebrannt werden, welche aufgrund ihrer Schwerkraft und der Drehbewegung des Drehrohrs über den Fallschacht 4 des Nebenabwärmesystems auf den Kühlrost 5 des Kühlers 6 fallen, wo sie durch die über die Kühlerzuluftleitung 7 zugeleitete Luft von ihrer Ausgangstemperatur von etwa 800 - 900 °C auf die Endtemperatur von etwa 100 - 120 °C abgekühlt werden. Über die Klinkertransportleitung 8 werden die Klinker dann einer nicht dargestellten Klinkerhalle bzw. der Weiterverarbeitung zugeleitet. Die Kühlerabluft wird teilweise über die Abluftleitung 9 und nicht dargestellte Wärmetauscher wieder ins Freie geleitet, der Rest, der sich an den heißen Klinkern auf etwa 800 - 1000 °C erwärmt hat, wird über den Fallschacht 4 dem Drehrohr und damit dem Brenner 2 zugeführt, wo der enthaltene Sauerstoff mit dem über die Brennstoffzuführung 10 zugeführten Primärbrennstoff verbrannt wird. Als Primärbrennstoffe werden vorzugsweise Kohlenstaub oder Öl verwendet. Der erfindungsgemäß zugeführte Reststoff wird entweder über eine Leitung 11 in oder in der Nähe des Brenners 2 in Form feiner Teilchen eingeblasen oder über eine Leitung 12 oberhalb des Fallschachts 4 in das Nebenabwärmesystem eingeleitet.

Soweit der Reststoff zu naß ist (> 50 %), um blasfähig zu sein, wird er über eine Feststoffzuführung 13. beispielsweise einen Schneckenförderer oder ein Transportband, ebenfalls in den Fallschacht 4 eingebracht.

Wie bereits vorstehend gesagt wurde, verdampft der im zugesetzten Reststoff enthaltene Wasseranteil beim Zusammenbringen mit den heißen Klinkern oder der heißen Sekundärluft im Nebenabwärmesystem praktisch augenblicklich explosionsartig, so daß die Feststoffanteile sehr fein verteilt sind. Brennbare Anteile werden dabei sowohl im Nebenabwärmesystem als auch im Drehrohr selbst aufgrund des hohen Sauerstoffanteils der Primärluft und der für eine Entzündung ausreichend hohen Temperatur von über 800 °C rasch und vollständig verbrannt. Die bei der Verdampfung und Verbrennung zurückbleibenden feindispergierten mineralischen Bestandteile des Reststoffes werden mit der Sekundärluft in das Drehrohr hineingetragen, wo sie mit dem Rohmehl vermischt und ebenfalls als Klinker ausgebracht werden. Der Ascheanteil erhöht anteilig die Klinkerproduktion merklich.

Der folgende beispielhafte Verfahrensablauf soll die Erfindung näher erläutern.

Der mineralstoff-, insbesondere tonhaltige Reststoff der Papierindustrie wird vom Hersteller direkt angefahren. Nach der Entladung im Tageslager wird der Reststoff einem mechanischen oder pneumatischen Beschicker aufgegeben.

Aus dem mechanischen Beschicker wird der Stoff mit Förderaggregaten kontinuierlich den Öfen zugefördert. Dabei handelt es sich beispielsweise um Ketten-, Schnecken- oder Bandförderer mit in der Drehzahl stufenlos regelbaren Antrieben, wodurch die Aufgabemenge entsprechend variiert werden kann. Die Förderer werfen das Fördergut in mit Rückschlagkappen ausgestattete Schurren ab, welche wiederum den Reststoff direkt in den Gasstrom zwischen Haupt- und Nebenabwärmesystem (Kühler) einbringen.

Aus dem pneumatischen Beschicker wird der Stoff kontinuierlich in den Gasstrom zwischen Haupt- und Nebenabwärmesystem (Kühler) gefördert.

In Langzeitversuchen wurde mit Hilfe der kontinuierlich arbeitenden Betriebsemissionsüberwachung nachgewiesen, daß durch den Einsatz des Stoffes gegenüber dem Betrieb ohne Reststoff keine zusätzlichen oder anderen Emissionen oder auf andere Weise Gefahren, Nachteile oder Belästigungen für die Allgemeinheit oder Nachbarschaft auftreten. Dagegen verminderten sich die NOₓ-Emissionen deutlich. Der Primärbrennstoffbedarf nimmt, abhängig vom Wassergehalt des Reststoffes, seines Heizwertes und der Aufgabenmenge, ab.

Bei der stofflichen und thermischen Verwertung der ungetrockneten und unbehandelten Reststoffe in den Öfen fallen weder zusätzliche Stäube noch Schlacken als Abfallprodukte an.

Insbesondere bei sehr wasserhaltigen Schlämmen trägt der Gehalt der brennbaren Bestandteile überwiegend nur zu einer Kompensation der Verdampfungswärme bei, so daß keine oder nur geringe Mengen der Primärbrennstoffe gespart werden. Der große Vorteil dieser Verfahrensführung liegt jedoch darin, daß durch das verdampfte Wasser die Verbrennungstemperatur der Flamme im Drehrohr herabgesetzt wird und diese gleichzeitig länger und gleichmäßiger wird. Dies hat den Vorteil, daß die NOₓ-Bildung signifikant gesenkt wird, d. h. von im Mittel 1200 mg/Nm³ auf ungefähr 700 mg/Nm³, während die CO-Werte mit 500 mg/Nm³ durch den Reststoffzusatz praktisch nicht verändert werden.

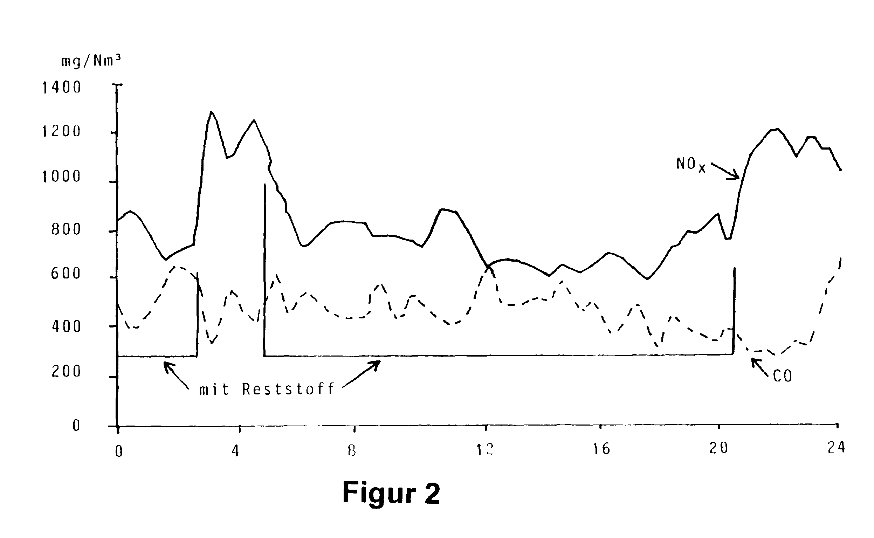

**Figur 2** zeigt den Verlauf der jeweiligen Kurven über einen Tag, wobei in der 3. bis 5. und nach der 20. Stunde die Zufuhr von Reststoffen unterbrochen wurde.

### Bezugszeichenliste

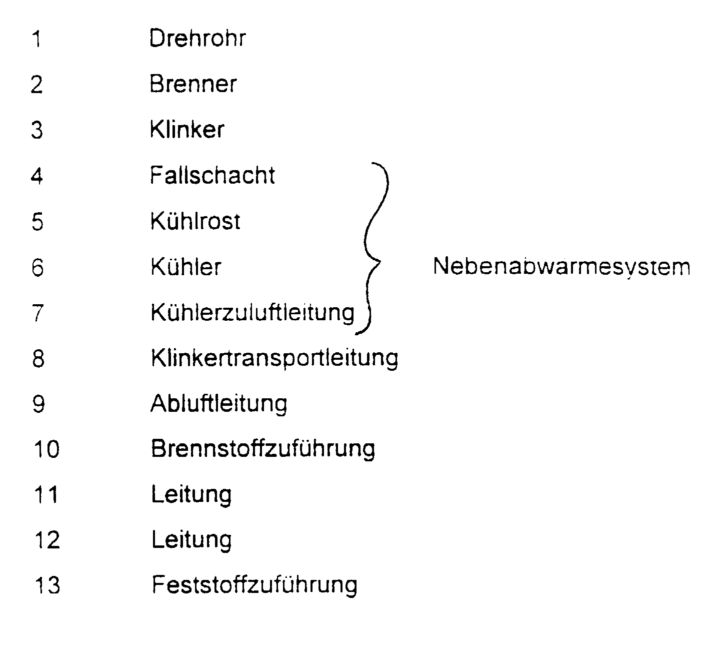

## Patentansprüche

1. Verfahren zur stofflichen und thermischen Verwertung von Wasser, Mineralien und brennbare Anteile enthaltenden Reststoffen in Zementöfen zur Herstellung von Portlandzementklinker, **dadurch gekennzeichnet**, daß Reststoffe, die einen Gehalt von
65 - 35 Teilen Wasser, sowie
35 - 65 Teilen Trockensubstanz, bestehend aus
10 - 30 Teilen mineralischen Anteilen und
10 - 35 Teilen brennbaren Anteilen,
aufweisen, ohne vorherige Trocknung in die Zementbrennanlage eingeschleust werden indem der Reststoff mit einem Beschicker in den Schacht zwischen Klinkerkühler und Ofenkopf eingeführt wird, wo er von der ca. 800 - 1000°C heißen Luft, der sogenannten Sekundärluft, erfaßt und in den Ofen eingetragen wird.

2. Verfahren nach Anspruch 1, **dadurch gekennzeichnet,** daß als Abfallschlamm Reststoff aus der Papierindustrie eingeschleust wird.

3. Verfahren nach Anspruch 2, **dadurch gekennzeichnet,** daß als Abfallschlamm Abfall aus dem Recycling von Altpapier verwendet wird.

## Claims

1. Process for the material and thermal utilisation of residual materials containing water, minerals and combustible parts in cement kilns for the production of Portland cement clinker, characterised in that residual materials which have a content of
65 - 35 parts water, as well as
35 - 65 parts dry substance consisting of
10 - 30 parts mineral parts and
10 - 35 parts of combustible parts,
are, without previous drying, introduced into the cement plant in that the residual material is introduced with a conveyor into the shaft between clinker cooler and kiln head where it is taken up by the about 800 - 1000°C hot air, the so-called secondary air, and introduced into the kiln.

2. Process according to claim 1, characterised in that residual material from the paper industry is introduced as waste sludge.

3. Process according to claim 2, characterised in that waste from the recycling of waste paper is used as waste sludge.

## Revendications

1. Procédé pour le recyclage matériel et thermique de résidus contenant de l'eau, des matières minérales et des fractions combustibles dans des fours à ciment pour la fabrication de clinker de ciment Portland, caractérisé en ce qu'on écluse dans l'installation de cuisson de ciment, sans séchage préalable, des résidus qui présentent une teneur de
65-35 parties d'eau, et
35-65 parties de matière sèche constituée par
10-30 parties de fractions minérales et
10-35 parties de fractions combustibles,
en faisant pénétrer le résidu avec un chargeur mécanique dans le puits entre le refroidisseur du clinker et la tête de four où il est saisi par l'air chaud, ce que l'on appelle l'air secondaire, possédant une température d'environ 800 à 1000°C et en l'introduisant dans le four.

2. Procédé selon la revendication 1, caractérisé en ce qu'on écluse, à titre des boues résiduelles, des résidus provenant de l'industrie de fabrication du papier.

3. Procédé selon la revendication 2, caractérisé en ce qu'on utilise, à titre des boues résiduelles, des déchets provenant du recyclage de vieux papiers.
